# EUROPÄISCHE PATENTSCHRIFT

(11) **EP 4 060 786 B1**
(45) Veröffentlichungstag und Bekanntmachung des Hinweises auf die Patenterteilung: **19.06.2024**
(21) Anmeldenummer: 22154869.6
(22) Anmeldetag: 03.02.2022
(51) Int. Cl.: H01M 10/42, H01M 50/579, B60R 21/0136, H01M 50/242

(54) **AUFPRALLERFASSUNGSVORRICHTUNG FÜR EINE TRAKTIONSBATTERIE EINES KRAFTFAHRZEUGS UND KRAFTFAHRZEUG MIT EINER AUFPRALLERFASSUNGSVORRICHTUNG**
IMPACT DETECTION DEVICE FOR A TRACTION BATTERY OF A MOTOR VEHICLE AND MOTOR VEHICLE COMPRISING AN IMPACT DETECTION DEVICE
DISPOSITIF DE DÉTECTION D'IMPACT POUR UNE BATTERIE DE TRACTION D'UN VÉHICULE AUTOMOBILE ET VÉHICULE AUTOMOBILE DOTÉ D'UN DISPOSITIF DE DÉTECTION D'IMPACT

(30) Priorität: 17.03.2021 DE 102021106545
(43) Veröffentlichungstag der Anmeldung: 21.09.2022
(73) Patentinhaber: Audi AG, 85045 Ingolstadt (DE); Dr. Ing. h.c. F. Porsche Aktiengesellschaft, 70435 Stuttgart (DE)
(72) Erfinder: RAUSCH, Julius, 74076 Heilbronn (DE); STOLL, Oliver, 69429 Waldbrunn (DE); BRANDIC, Ilija, 74385 Pleidelsheim (DE); GRUPP, Markus, 75399 Unterreichenbach (DE)
(74) Vertreter: Hofstetter, Schurack & Partner

(56) Entgegenhaltungen:
- DE-A1-102015 103 904
- DE-A1-102016 122 288
- DE-A1-102017 211 047
- DE-A1-102018 129 158

## Beschreibung

Die Erfindung betrifft eine Aufprallerfassungsvorrichtung für eine Traktionsbatterie eines Kraftfahrzeugs sowie ein Kraftfahrzeug mit einer solchen Aufprallerfassungsvorrichtung.

Heutzutage werden viele Kraftfahrzeuge teil- oder vollelektrisch ausgebildet, beispielsweise als Hybridfahrzeug oder als rein elektrisch betriebenes Kraftfahrzeug. Eine dafür benötigte Antriebsbatterie beziehungsweise Traktionsbatterie, die üblicherweise mehrere Batteriezellen umfasst, ist dabei meistens in einem Bodenbereich des Kraftfahrzeugs angeordnet. Das hat den Nachteil, dass Stöße von unten direkt auf die Traktionsbatterie treffen, was zu Schäden an der Traktionsbatterie führen kann. Um Schäden durch eine Intrusion von unterhalb zu begrenzen oder zu vermeiden, ist es bekannt, ein Unterbodenelement für die Traktionsbatterie zu verwenden, das beispielsweise als Unterfahrschutz ausgebildet sein kann, um die Traktionsbatterie vor einer direkten Krafteinwirkung zu schützen. Dabei kann das Unterbodenelement eine Verkleidung am Unterboden der Traktionsbatterie und/oder des Kraftfahrzeugs sein, die die Traktionsbatterie vor Umwelteinflüssen und/oder mechanischen Einflüssen abschirmt.

Jedoch hält auch ein Unterbodenelement nicht alle Stöße von der Traktionsbatterie fern und es kann bei starken Stößen von unterhalb, beispielsweise bei einem Aufsetzen des Kraftfahrzeugs bei einer Pollerüberfahrt, dazu kommen, dass das Unterbodenelement in die Traktionsbatterie gedrückt wird und hierdurch Schäden an der Traktionsbatterie entstehen. Das heißt, es kann durch einen Aufprall zu einer Intrusion der Traktionsbatterie kommen. Damit diese Art von Schäden festgestellt werden können und Folgeschäden am Kraftfahrzeug und/oder Gefahren für einen Fahrer des Kraftfahrzeugs zu minimieren, ist ein Erfassen eines Aufpralls auf die Traktionsbatterie notwendig, um Rückschlüsse zu ziehen, ob Batteriezellen der Traktionsbatterie durch einen Aufprall beschädigt worden sind. Das heißt, es wird ein Sensierungskonzept benötigt, um einen Stoß beziehungsweise ein Verformen der Traktionsbatterie feststellen zu können.

Insbesondere haben sich in anderen Fahrzeugbereichen Sensierungskonzepte als vorteilhaft erwiesen, die über eine Druckänderung eines Luftdrucks in einer luftgefüllten Kammer eine Verformung des Fahrzeugbereichs und damit einen Aufprall anzeigen können.

So ist aus der DE 10 2014 203 255 A1 ist eine Vorrichtung zur Erfassung eines Seitenaufpralls eines Objekts auf eine Fahrzeugtür eines Kraftfahrzeugs bekannt. Die Vorrichtung umfasst eine Fahrzeugtür, die eine Türaußenseite und eine Türinnenseite aufweist, die derart miteinander verbunden sind, dass sich zwischen diesen ein luftgefülltes Türinnenvolumen bildet, sowie mindestens eine Sensorik, wobei die Sensorik den Türinnendruck im Türinnenvolumen oder ein davon abhängiges Signal erfasst, wobei die Vorrichtung weiter mindestens ein Steuergerät aufweist, das derart ausgebildet ist, dass dieses in Abhängigkeit der Signale der mindestens einen Sensorik ein Ansteuersignal für eine Schutzeinrichtung generiert, wobei an einer das Türinnenvolumen begrenzenden Seite der Türaußenseite ein Türaufprallträger angeordnet ist, wobei ein Teil der Sensorik zwischen Türaufprallträger und der Türaußenseite angeordnet ist und derart ausgebildet ist, dass dies einen Kontakt eines Objekts mit der Türaußenseite im Bereich des Türaufprallträgers erfasst.

Aus der DE 10 2013 014 358 A1 ist eine Aufprallerfassungseinheit für ein Fahrzeug bekannt. Die Aufprallerfassungseinheit umfasst eine Sensoreinheit, welche mindestens einen Druckschlauch aufweist, welcher in einer Nut zumindest teilweise in einer ersten Fahrzeugkomponente eines Fahrzeugendbereichs angeordnet ist. Die Sensoreinheit erzeugt bei einem Aufprall ein korrespondierendes Drucksignal und gibt das Drucksignal aus. Eine Öffnung der Nut ist senkrecht zu einer Fahrzeuglängsrichtung in Fahrzeughochrichtung ausgerichtet.

Aus der DE 10 2018 129 158 A1 ist eine Sicherheitsvorrichtung für eine Batterie bekannt, die ein Unterbodenteil für ein Fahrzeug, eine Mehrzahl von Sensoren und eine Auswertevorrichtung aufweist. Die Sensoren sind jeweils dazu ausgebildet, ein Sensorsignal in Abhängigkeit von einer Verformung des Unterbodenteils zu erzeugen und der Auswertevorrichtung zuzuführen, und die Auswertevorrichtung ist dazu ausgebildet, aus den Sensorsignalen sowohl eine erste Information über den Ort der Verformung des Unterbodenteils als auch eine zweite Information über die Stärke der Verformung zu ermitteln, und in Abhängigkeit von der ersten Information und von der zweiten Information zu bestimmen, ob ein erster Zustand vorliegt, der signalisiert, dass ein Fahrbetrieb aufrechterhalten werden kann, oder ob ein zweiter Zustand vorliegt, der signalisiert, dass ein Fahrbetrieb nicht mehr aufrechterhalten werden kann.

Aus der DE 10 2017 211 047 A1 ist ein Batteriepack, insbesondere für ein Elektrofahrzeug, bekannt, umfassend mindestens ein Batteriemodul mit mindestens einer Batteriezelle, mindestens einen Drucksensor zur Erkennung einer mechanischen Einwirkung auf das Batteriepack und eine Steuereinheit, wobei mindestens ein Sensorsignal von dem mindestens einen Drucksensor zu der Steuereinheit übertragbar ist. Mindestens eine der Batteriezellen weist mindestens eine Deaktivierungsvorrichtung zur Deaktivierung der Batteriezelle auf, wobei mindestens ein Ansteuersignal von der Steuereinheit zu der mindestens einen Deaktivierungsvorrichtung übertragbar ist.

Aus der DE 10 2016 122 288 A1 ist eine Fahrzeugfrontstruktur für ein Kraftfahrzeug mit einem Sicherheitssystem bekannt, mit einem Druckschlauch zur Erfassung eines Fußgängeraufpralls an einem Frontbereich des Kraftfahrzeugs und mit einem sich quer zu einer Längsrichtung des Kraftfahrzeugs erstreckenden Querträger. Dabei ist der Druckschlauch oberhalb des Querträgers angeordnet, so dass der Fußgängeraufprall in einer Lastebene oberhalb einer durch den Querträger definierten Lastebene erfassbar ist.

Aus der DE 10 2015 103 904 A1 ist eine Unterbodeneinheit zum Schutz von Kraftfahrzeugkomponenten eines Kraftfahrzeugs, insbesondere einer Traktionsbatterie zum elektrischen Antrieb des Kraftfahrzeugs, vor bodenseitigen Schlägen bekannt, mit einer Bodenplatte zum bodenseitigen Abdecken der Kraftfahrzeugkomponente und mehreren separaten mit der Bodenplatte verbundenen Schlagschutzkacheln zur Aufnahme bodenseitiger Schläge.

Im Gegensatz zu den oben genannten Fahrzeugbereichen ergibt sich bei der Traktionsbatterie die Schwierigkeit, dass nur ein begrenzter Bauraum, insbesondere für die Anbringung eines Drucksensors, zur Verfügung steht und dass die luftgefüllte Kammer definiert abgedichtet werden muss, um reproduzierbare Drucksignalcharakteristiken zu erhalten, was Konzepte zur Druckweiterleitung erschwert.

Der Erfindung liegt daher die Aufgabe zugrunde, eine Drucksensierung für eine Traktionsbatterie bereitzustellen, die reproduzierbare Drucksignalcharakteristiken bereitstellt.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Durch die Erfindung ist eine Aufprallerfassungsvorrichtung für eine Traktionsbatterie eines Kraftfahrzeugs bereitgestellt. Die Aufprallerfassungsvorrichtung umfasst ein Unterbodenelement für die Traktionsbatterie, wobei hierbei eine Bodenverkleidung, insbesondere ein Unterfahrschutz, für die Traktionsbatterie gemeint ist, die in einer bestimmungsgemäßen Einbaulage im Kraftfahrzeug in Richtung einer Unterseite des Kraftfahrzeugs und/oder der Traktionsbatterie angeordnet ist und die zumindest eine Schutzwirkung vor äußeren Einflüssen bereitstellt. Des Weiteren umfasst die Aufprallerfassungsvorrichtung zumindest eine luftgefüllte Kammer, die auf dem Unterbodenelement ausgebildet ist und die zumindest seitlich durch ein Dichtmaterial nach außen abgedichtet und definiert ist. Nach oben und unten kann die luftgefüllte Kammer vorzugsweise durch das Unterbodenelement und eine Unterseite der Traktionsbatterie abgedichtet sein. Als Dichtmaterial kann beispielsweise eine Polyurethan-Dichtung verwendet werden, die in einem Herstellungsprozess auf das Unterbodenelement aufgetragen werden kann. Zusätzlich umfasst die Aufprallerfassungsvorrichtung einen Druckschlauch und ein Einführelement für den Druckschlauch, wobei über den Druckschlauch die Kammer mit einem Drucksensor gekoppelt ist, und wobei das Einführelement an dem Unterbodenelement angebracht ist und dazu ausgebildet ist, den Druckschlauch an einer vorgegebenen Position mit der Kammer durch das Dichtmaterial hindurch zu koppeln, wobei das Einführelement von dem Dichtmaterial zur Abdichtung der Kammer eingebettet ist.

Mit anderen Worten kann beispielsweise ein Einführelement an dem Unterbodenelement befestigt werden, insbesondere mittels einer Steckverbindung und/oder einer Klebeverbindung. Das Einführelement kann beispielsweise mittels eines Spritzgussverfahrens oder eines vergleichbaren Verfahrens hergestellt werden. Nach Anbringen des Einführelements auf dem Unterbodenelement kann der Druckschlauch in das Einführelement eingeführt werden, wobei der Druckschlauch mit einem Drucksensor koppelbar ist. Anschließend kann das Dichtmaterial auf das Unterbodenelement zur Ausbildung der Kammer aufgetragen werden, wobei das Einführelement von dem Dichtmaterial eingebettet wird. Das bedeutet, dass das Einführelement einen Teil der Abdichtung der Kammer nach außen darstellen kann. Das hat den Vorteil, dass bei einer Verformung des Unterbodenelements die luftgefüllte Kammer eingedrückt werden kann, was zu einer Druckänderung führt, die über das Einführelement und den Druckschlauch an den Drucksensor weitergegeben werden kann, der die Druckänderung detektieren kann. Durch Detektion der Druckänderung kann dann festgestellt werden, dass eine Intrusion auf die Traktionsbatterie stattgefunden hat.

Durch die Verwendung des Einführelements kann erreicht werden, dass ein Druckschlauch mit der luftgefüllten Kammer gekoppelt werden kann, wodurch der Drucksensor beabstandet angeordnet werden kann, was aufgrund eines Platzmangels an der Traktionsbatterie vorteilhaft ist. Ein weiterer Vorteil, der sich durch die Verwendung des Einführelements ergibt, ist, dass die Kammer durch das Dichtmaterial definiert abgedichtet werden kann und somit bei einem Aufprall beziehungsweise einer Intrusion des Unterbodenelements eine reproduzierbare Drucksignalcharakteristik erzeugt werden kann. Insbesondere würde ohne Einführelement und bei einer alleinigen Einführung des Druckschlauchs durch das Dichtmaterial hindurch die Gefahr eines Verrutschens des Druckschlauchs bestehen. Des Weiteren ist ein Abdichten der Kammer bei der alleinigen Verwendung des Druckschlauchs erschwert, und es können Lücken in der Dichtung entstehen, durch die die Drucksignalcharakteristik beeinflusst wird. Insgesamt ergibt sich durch die Erfindung also der Vorteil, dass auf einfache Art und Weise eine Drucksensierung bereitgestellt werden kann, die reproduzierbare Drucksignalcharakteristiken aufweist und bei der ein Drucksensor beabstandet von der luftgefüllten Kammer angeordnet werden kann.

Die Erfindung umfasst auch Ausführungsformen, durch die sich zusätzliche Vorteile ergeben.

Eine Ausführungsform sieht vor, dass das Einführelement einen Grundkörper aufweist, durch den ein zylinderförmiger Durchgangskanal zum Einführen des Druckschlauchs gebildet ist. Der Grundkörper kann vorzugsweise ein starres Material aufweisen und mittels eines Spritzgussverfahrens hergestellt sein. Insbesondere kann eine Form des Grundkörpers die Form eines Kreissegments aufweisen, also auf der Oberseite eines Kreisbogens, der auf der Unterseite durch eine Kreissehne begrenzt wird. Somit ist die Unterseite des Grundkörpers des Einführelements flach, wodurch das Einführelement formschlüssig an dem Unterbodenelement angebracht werden kann. Des Weiteren kann durch die kreisbogenförmige Oberseite das Einführelement besonders gut durch das Dichtmaterial eingebettet werden, wodurch dieses definiert abgedichtet werden kann und keine Lücken in der Dichtung entstehen.

Durch den Grundkörper hindurch kann ein zylinderförmiger Durchgangskanal gebildet sein, in dem der Druckschlauch eingeführt und vorzugsweise befestigt werden kann. Durch diese Ausführungsform wird eine besonders geeignete Ausgestaltung des Einführelements bereitgestellt.

Vorzugsweise ist vorgesehen, dass in dem Durchgangskanal ein Anschlag für den Druckschlauch angeordnet ist. Vorzugsweise kann vorgesehen sein, dass der Anschlag den Druckschlauch derart in dem Durchgangskanal hält, dass dieser an der Seite der Kammer anliegt. Der Anschlag im Durchgangskanal kann beispielsweise durch eine Verjüngung im Durchgangskanal bereitgestellt sein. Hierdurch ergibt sich der Vorteil, dass der Druckschlauch mit einer durch den Anschlag vordefinierten Länge in dem Einführelement angeordnet werden kann, wodurch reproduzierbare Drucksignalcharakteristiken erreicht werden können.

Eine weitere Ausführungsform sieht vor, dass in dem Einführelement ein luftdurchlässiges Filterelement angeordnet ist, wobei das Filterelement als Schmutzfilter geeignet ist. Mit anderen Worten kann in dem Einführelement, insbesondere in dem Durchgangskanal des Einführelements ein Filterelement angeordnet sein, das Schmutz filtern kann. Das Filterelement kann vorzugsweise luftdurchlässig sein, so dass ein Druck aus der Kammer über den Druckschlauch an den Drucksensor übertragbar ist. Durch diese Ausführungsform ergibt sich der Vorteil, dass Schmutz, der insbesondere in der Kammer des Unterbodenelements vorhanden sein kann, nicht über den Druckschlauch zu dem Drucksensor gelangt, der durch den Schmutz beschädigt werden könnte.

Vorzugsweise ist vorgesehen, dass das Filterelement als Gitterstruktur ausgebildet ist. Eine Gitterstruktur kann hierbei eine kostengünstige und einfache Schmutzfilterwirkung für grobe Schmutzpartikel bieten. Des Weiteren kann durch die Gitterstruktur der Druck über den Druckschlauch zu dem Drucksensor übertragen werden, ohne dass der Druck wesentlich von dem Filterelement beeinflusst wird.

Eine weitere Ausführungsform sieht vor, dass das Einführelement einen Grundkörper aufweist, wobei der Grundkörper an einer Oberseite eine halbzylinderförmige Aussparung aufweist, die als Aufsteckverbindung für den Druckschlauch ausgebildet ist. Mit anderen Worten kann in dieser Ausführungsform der Druckschlauch von oben auf das Einführelement aufgesteckt werden, indem ein Grundkörper des Einführelements auf einer Oberseite eine halbzylinderförmige Aussparung aufweist. In die halbzylinderförmige Aussparung kann der Druckschlauch eingesteckt beziehungsweise eingeklemmt werden, wodurch der Druckschlauch in Position gehalten werden kann. Nach Anbringung des Druckschlauchs kann vorzugsweise das Dichtmaterial zum Abdichten der Kammer über das Einführelement und den Druckschlauch aufgetragen werden. Durch diese Ausführungsform kann eine weitere vorteilhafte Ausgestaltung zur Drucksensierung und zum Halten des Druckschlauchs in einer vorgegebenen Position erreicht werden. Durch das Halten des Druckschlauchs in der vorgegebenen Position kann somit eine reproduzierbare Drucksignalcharakteristik erzeugt werden.

Eine weitere Ausführungsform sieht vor, dass das Einführelement dazu ausgebildet ist, den Druckschlauch mit einem vorgegebenen Neigungswinkel mit der Kammer zu koppeln, wobei durch den vorgegebenen Neigungswinkel der Druckschlauch schräg nach unten in Richtung der Kammer angeordnet ist. Mit anderen Worten verfügt das Einführelement über eine Einführschräge schräg nach unten, so dass der Druckschlauch schräg nach unten in Richtung der Kammer zeigt. Das hat den Vorteil, dass Wasser, das insbesondere durch Kondensation von Feuchtigkeit an einer Kühleinrichtung der Traktionsbatterie entstehen kann, nicht durch den Druckschlauch in den Drucksensor fließen kann, sondern zurück in die Kammer abfließen kann.

Eine weitere Ausführungsform sieht vor, dass das Einführelement eine Fixiereinrichtung aufweist, die dazu ausgebildet ist, den Schlauch zu fixieren. So können beispielsweise der Druckschlauch und die Fixiereinrichtung einen Schraubverschluss oder einen Flansch aufweisen, mit dem der Druckschlauch in dem Einführelement fixierbar ist. Alternativ kann die Fixiereinrichtung eine Klemme, insbesondere eine Schlauchklemme zum Fixieren des Druckschlauchs umfassen. Durch diese Ausführungsform ergibt sich der Vorteil, dass der Druckschlauch fest in dem Einführelement fixiert werden kann, wodurch ein Verrutschen verhindert werden kann und somit reproduzierbar eine Drucksignalcharakteristik erhalten werden kann.

Eine weitere Ausführungsform sieht vor, dass das Einführelement mittels einer Steckverbindung und/oder Klebeverbindung an dem Unterbodenelement angebracht ist. So kann das Einführelement beispielsweise auf das Unterbodenelement gesteckt werden und zusätzlich mit diesem verklebt werden. So kann das Einführelement an einer vordefinierten Position zur Bildung der Kammer angebracht werden. Das hat den Vorteil, dass ein Produktionsprozess des Unterbodenelements vereinfacht werden kann, da das Einführelement fest an einer vordefinierten Position angebracht werden kann.

Erfindungsgemäß ist auch ein Kraftfahrzeug mit einer Aufprallerfassungsvorrichtung gemäß einem der vorhergehenden Ausführungsformen bereitgestellt. Hierbei ergeben sich gleiche Vorteile und Variationsmöglichkeiten wie bei der Aufprallerfassungsvorrichtung. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehören auch Weiterbildungen des erfindungsgemäßen Kraftfahrzeugs, die Merkmale aufweisen, wie sie bereits im Zusammenhang mit den Weiterbildungen der erfindungsgemäßen Aufprallerfassungsvorrichtung beschrieben worden sind. Aus diesem Grund sind die entsprechenden Weiterbildungen des erfindungsgemäßen Kraftfahrzeugs hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisiertes Kraftfahrzeug mit einer Aufprallerfassungsvorrichtung gemäß einer beispielshaften Ausführungsform;
- Fig. 2: eine Draufsicht auf ein schematisiertes Unterbodenelement einer Aufprallerfassungsvorrichtung gemäß einer beispielshaften Ausführungsform;
- Fig. 3: eine seitliche Schnittansicht eines schematisierten Einführelements gemäß einer beispielhaften Ausführungsform;
- Fig. 4: eine Frontalansicht eines schematisierten Einführelements gemäß einer beispielhaften Ausführungsform;
- Fig. 5: eine Frontalansicht eines schematisierten Einführelements gemäß einer weiteren beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

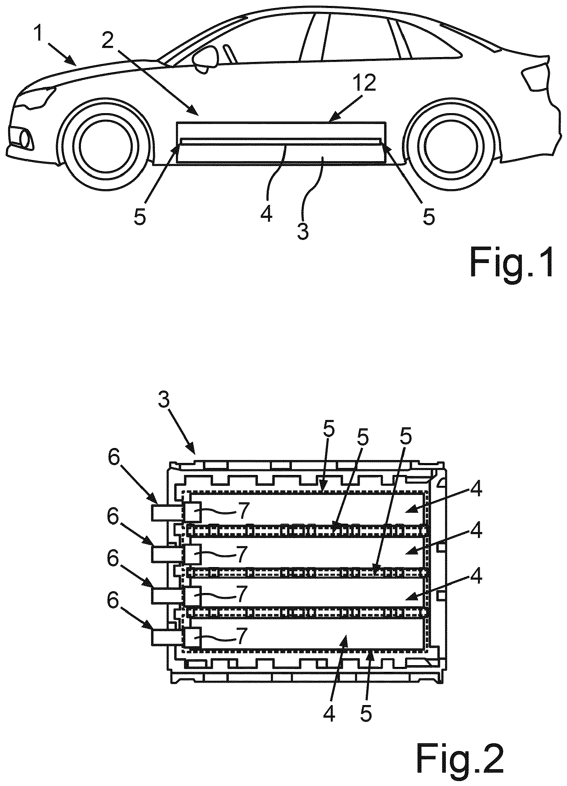

In Fig. 1 ist ein schematisiertes Kraftfahrzeug 1 mit einer Aufprallerfassungsvorrichtung 2 gemäß einer beispielhaften Ausführungsform dargestellt. Das Kraftfahrzeug 1 kann beispielsweise ein Personenkraftwagen sein, der elektrisch betrieben wird. Zur Energieversorgung kann das Kraftfahrzeug 1 eine Traktionsbatterie 12 beziehungsweise Antriebsbatterie umfassen, wobei die Traktionsbatterie 12 mehrere Batteriezellen (nicht gezeigt) aufweisen kann.

Zum Schutz der Traktionsbatterie 12 vor Stößen von unterhalb des Kraftfahrzeugs 1 kann ein Unterbodenelement 3, das als Unterfahrschutz ausgebildet sein kann, unterhalb des Anbringungsorts der Traktionsbatterie 12 angeordnet sein. Vorzugsweise kann das Unterbodenelement 3 dazu ausgebildet sein, die Traktionsbatterie 12 vor mechanischen Einflüssen zu schützen. Dennoch kann es vorkommen, dass es aufgrund eines starken Stoßes von unterhalb des Kraftfahrzeugs 1, beispielsweise bei einem Aufsetzen auf einem Bordstein, zu einer Intrusion der Traktionsbatterie 12 kommt. Um das festzustellen und einen Fahrer des Kraftfahrzeugs 1 vor einer Beschädigung der Traktionsbatterie 12 zu warnen, kann daher die nachfolgend beschriebene Aufprallerfassungsvorrichtung 2 bereitgestellt sein.

Die Aufprallerfassungsvorrichtung 2 kann das Unterbodenelement 3 aufweisen, das zumindest eine oder mehrere luftgefüllte Kammern 4 umfasst, die seitlich umlaufend durch ein Dichtmaterial 5 nach außen abgedichtet sind. Nach oben und unten kann die luftgefüllte Kammer 4 durch das Unterbodenelement 3 und die Traktionsbatterie 12 begrenzt sein und durch diese abgedichtet werden. Vorzugsweise können die luftgefüllten Kammern 4 bei einer Verformung des Unterbodenelements 3 ihr Volumen ändern, wodurch es zu einer Druckänderung des Luftdrucks in den Kammern 4 kommt. Diese Druckänderung kann durch einen Drucksensor (nicht gezeigt) detektiert werden, um einen Stoß beziehungsweise eine Verformung des Unterbodenelements und damit eine Beschädigung der Traktionsbatterie 12 zu erfassen.

In Fig. 2 ist das Unterbodenelement 3 des Kraftfahrzeugs 1 schematisch in einer Draufsicht aus Richtung der Traktionsbatterie 12 dargestellt. Das Unterbodenelement 3 kann mehrere luftgefüllte Kammern 4 aufweisen, die als flächige Bereiche ausgebildet sind, wobei über den Kammern 4 die Batteriezellen der Traktionsbatterie 2 angeordnet werden können. Die Kammern 4 sind vorzugsweise wie dargestellt durch das Dichtmaterial 5, das insbesondere ein Polyurethan-Schaum sein kann, seitlich umlaufend abgedichtet. Damit ein reproduzierbares und charakteristisches Drucksignal festgestellt werden kann, ist vorzugsweise vorgesehen, dass eine gute Abdichtung der Kammern 4 durch das Dichtmaterial 5 erreicht wird. Problematisch ist es, dass der Drucksensor, der für die Detektion eines Druckunterschieds verwendet werden kann, aufgrund des begrenzten Raumbedarfs an der Traktionsbatterie 12 vorzugsweise beabstandet zu der Traktionsbatterie 12 und dem Unterbodenelement 3 angeordnet werden muss. Daher ist es vorteilhaft, die Druckänderung über einen oder mehrere Druckschläuche 6 von der jeweiligen Kammer 4 an den beabstandeten Drucksensor weiterzuleiten.

Hierbei liegt die Schwierigkeit darin, einen Durchgang für den Druckschlauch 6 in die jeweilige Kammer 4 festzulegen. Weder an der Unterseite des Unterbodenelements 3 noch auf der Oberseite der Kammern 4 ist eine Schlauchdurchführung technisch umsetzbar. Hinsichtlich Bauraum bleibt somit nur noch die Durchführung des Druckschlauchs 6 durch den Dichtungsverlauf des Dichtmaterials 5, was hinsichtlich Reproduzierbarkeit und Dichtheit zunächst nicht ohne Weiteres möglich ist. Insbesondere kann bei der Verwendung des Druckschlauchs 6 alleine eine Dichtheit der Kammern 4 und ein reproduzierbarer Anbringungsort nur schwer umgesetzt werden.

Daher ist vorzugsweise vorgesehen, ein Einführelement 7 bereitzustellen, das an dem Unterbodenelement 3 angebracht werden kann, insbesondere mittels einer Steck- und/oder Klebeverbindung. In dieses Einführelement 7 kann der Druckschlauch 6 eingeführt und fixiert werden, wobei dadurch der Druckschlauch 6 an einer vorgegebenen Position mit der Kammer 4 verbunden ist. Vorzugsweise kann das Einführelement 7 nach Anbringung auf dem Unterbodenelement 3 von dem Dichtmaterial 5 zur Abdichtung der Kammer 4 eingebettet werden. Das heißt, dass das Einführelement 7 einen Teil der seitlichen Abdichtung der Kammern 4 bildet.

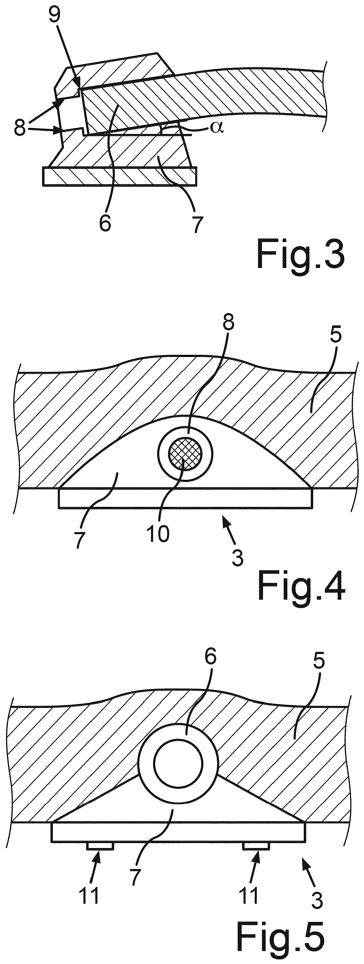

In Fig. 3 ist eine seitliche Schnittansicht durch eine schematische Darstellung eines Einführelements 7 gemäß einer beispielhaften Ausführungsform dargestellt. In dieser Ausführungsform kann das Einführelement 7 einen Grundkörper aufweisen, durch den ein zylinderförmiger Durchgangskanal zum Einführen des Druckschlauchs 6 gebildet ist. Der Durchgangskanal kann vorzugsweise nicht waagerecht zu dem Unterbodenelement 3 verlaufen, sondern einen vorgegebenen Neigungswinkel a aufweisen, so dass der Druckschlauch 6 schräg nach unten in Richtung der Kammer 4 in dem Einführelement 7 angeordnet werden kann. Das hat den Vorteil, dass Kondenswasser zurück in die Kammer 4 abfließen kann und nicht durch den Druckschlauch 6 hindurch zu dem Drucksensor gelangt.

Des Weiteren kann in dem Durchgangskanal des Einführelements 7 ein Anschlag 8 für den Druckschlauch 6 angeordnet sein. Somit kann der Druckschlauch 6 reproduzierbar und eindeutig fixiert werden. Zur Fixierung kann des Weiteren eine Fixiereinrichtung 9 bereitgestellt sein, beispielsweise am Anschlag 8. Die Fixiereinrichtung 9 kann insbesondere ein Schraubgewinde umfassen, mittels dem der Druckschlauch 6 in dem Einführelement 7 an der Fixiereinrichtung 9 angeschraubt und somit gekoppelt werden kann. Somit kann ein Verrutschen des Druckschlauchs 6 aus dem Einführelement 7 verhindert werden.

In Fig. 4 ist eine Frontalansicht des schematisierten Einführelements 7 gemäß der beispielhaften Ausführungsform aus Fig. 3 dargestellt. Der Grundkörper des Einführelements 7 kann, wie dargestellt, die Form eines Kreissegments aufweisen, durch das hindurch der zylinderförmige Durchgangskanal gebildet ist. Insbesondere kann eine Unterseite des Grundkörpers des Einführelements 7 flach sein, so dass es verbessert mit dem Unterbodenelement 3 verbunden werden kann, insbesondere geklebt. Eine Oberseite des Grundkörpers des Einführelements 7 kann eine Kreisbogenform aufweisen, so dass das Einführelement 7 besonders geeignet von dem Dichtmaterial 6 eingebettet werden kann. Der Anschlag 8 innerhalb des zylinderförmigen Durchgangskanals kann beispielsweise als Verjüngung ausgebildet sein, die umlaufend in dem Durchgangskanal angeordnet ist und den Druckschlauch 6 in Position halten kann. Vorzugsweise kann zusätzlich ein luftdurchlässiges Filterelement 10 im Durchgangskanal angeordnet sein, wobei das Filterelement 10 vorzugsweise als Schmutzfilter geeignet ist, um somit einen Schmutzeintrag durch den Druckschlauch 6 hindurch zum Drucksensor zu reduzieren. Dazu kann das Filterelement 10 beispielsweise als Gitterstruktur ausgebildet sein, die Schmutzpartikel mit einer vorgegebenen Größe vor einem Eindringen in den Druckschlauch 6 abhalten kann.

In Fig. 5 ist eine Frontalansicht eines schematisierten Einführelements 7 gemäß einer weiteren beispielhaften Ausführungsform dargestellt. Das hier dargestellte Einführelement 7 kann einen Grundkörper mit einer flachen Unterseite aufweisen, an der beispielsweise eine Steckverbindung 11 zum Einstecken auf das Unterbodenelement 3 bereitgestellt sein kann. Die Oberseite des Grundkörpers des Einführelements 7 kann wiederum kreissegmentförmig sein, wobei zusätzlich an der Oberseite eine halbzylinderförmige Aussparung bereitgestellt ist, die als Aufsteckverbindung für den Druckschlauch 6 ausgebildet sein kann. In dieser Ausführungsform kann der Druckschlauch 6 von oben auf das Einführelement 7 zur Fixierung aufgesteckt werden. Anschließend kann das Dichtmaterial 5 zur Abdichtung der luftgefüllten Kammern 4 auf das Einführelement 7 und den Druckschlauch 6 aufgebracht werden. Somit kann eine Abdichtung der Kammern 4 und eine Positionierung des Druckschlauchs 6 an einer vorgegebenen Position mit der Kammer 4 erreicht werden.

Insgesamt zeigen die Beispiele, wie durch die Erfindung ein Einführelement 7 für einen Druckschlauch 6 mit definierter Einschublänge und integrierter Gitterstruktur 10 bereitgestellt werden kann.

## Patentansprüche

1. Aufprallerfassungsvorrichtung (2) für eine Traktionsbatterie (12) eines Kraftfahrzeugs (1), umfassend ein Unterbodenelement (3) für die Traktionsbatterie (12) und zumindest eine luftgefüllte Kammer (4), die auf dem Unterbodenelement (3) ausgebildet ist, wobei die Kammer (4) zumindest seitlich durch ein Dichtmaterial (5) nach außen abgedichtet und definiert ist, und wobei die Aufprallerfassungsvorrichtung (2) ferner einen Druckschlauch (6) und ein Einführelement (7) für den Druckschlauch (6) aufweist, wobei über den Druckschlauch (6) die Kammer (4) mit einem Drucksensor gekoppelt ist, und wobei das Einführelement (7) an dem Unterbodenelement (3) angebracht ist und dazu ausgebildet ist, den Druckschlauch (6) an einer vorgegebenen Position mit der Kammer (4) durch das Dichtmaterial (5) hindurch zu koppeln, wobei das Einführelement (7) von dem Dichtmaterial (5) zur Abdichtung der Kammer (4) eingebettet ist.

2. Aufprallerfassungsvorrichtung (2) nach Anspruch 1, wobei das Einführelement (7) einen Grundkörper aufweist, durch den ein zylinderförmiger Durchgangskanal zum Einführen des Druckschlauchs (6) gebildet ist.

3. Aufprallerfassungsvorrichtung (2) nach Anspruch 2, wobei in dem Durchgangskanal ein Anschlag (8) für den Druckschlauch (6) angeordnet ist.

4. Aufprallerfassungsvorrichtung (2) nach einem der vorhergehenden Ansprüche, wobei in dem Einführelement (7) ein luftdurchlässiges Filterelement (10) angeordnet ist, wobei das Filterelement (10) als Schmutzfilter geeignet ist.

5. Aufprallerfassungsvorrichtung (2) nach Anspruch 4, wobei das Filterelement (10) als Gitterstruktur ausgebildet ist.

6. Aufprallerfassungsvorrichtung (2) nach Anspruch 1, wobei das Einführelement (7) einen Grundkörper aufweist, wobei der Grundkörper an einer Oberseite eine halbzylinderförmige Aussparung aufweist, die als Aufsteckverbindung für den Druckschlauch (6) ausgebildet ist.

7. Aufprallerfassungsvorrichtung (2) nach einem der vorhergehenden Ansprüche, wobei das Einführelement (7) dazu ausgebildet ist, den Druckschlauch (6) mit einem vorgegebenen Neigungswinkel mit der Kammer (4) zu koppeln, wobei durch den vorgegebenen Neigungswinkel der Druckschlauch (6) schräg nach unten in Richtung der Kammer (4) angeordnet ist.

8. Aufprallerfassungsvorrichtung (2) nach einem der vorhergehenden Ansprüche, wobei das Einführelement (7) eine Fixiereinrichtung (9) aufweist, die dazu ausgebildet ist, den Druckschlauch (6) zu fixieren.

9. Aufprallerfassungsvorrichtung (2) nach einem der vorhergehenden Ansprüche, wobei das Einführelement (7) mittels einer Steckverbindung (11) und/oder Klebeverbindung an dem Unterbodenelement (3) angebracht ist.

10. Kraftfahrzeug (1) mit einer Aufprallerfassungsvorrichtung (2) gemäß einem der vorhergehenden Ansprüche.

## Claims

1. An impact detection device (2) for a traction battery (12) of a motor vehicle (1), comprising an underbody element (3) for the traction battery (12) and at least one air-filled chamber (4), which is formed on the underbody element (3), wherein the chamber (4) is at least laterally sealed to the outside and defined by a sealing material (5), and wherein the impact detection device (2) further comprises a pressure hose (6) and an introduction element (7) for the pressure hose (6), wherein the chamber (4) is coupled to a pressure sensor via the pressure hose (6), and wherein the introduction element (7) is attached to the underbody element (3) and is formed to couple the pressure hose (6) to the chamber (4) through the sealing material (5) in a preset position, wherein the introduction element (7) is embedded by the sealing material (5) for sealing the chamber (4).

2. The impact detection device (2) according to claim 1, wherein the introduction element (7) comprises a basic body, by which a cylindrical passage channel for introducing the pressure hose (6) is formed.

3. The impact detection device (2) according to claim 2, wherein a stop (8) for the pressure hose (6) is arranged in the passage channel.

4. The impact detection device (2) according to any one of the preceding claims, wherein an air-permeable filter element (10) is arranged in the introduction element (7), wherein the filter element (10) is suitable as a dirt filter.

5. The impact detection device (2) according to claim 4, wherein the filter element (10) is formed as a grid structure.

6. The impact detection device (2) according to claim 1, wherein the introduction element (7) comprises a basic body, wherein the basic body comprises a semicylindrical recess on a top side, which is formed as a fitting connection for the pressure hose (6).

7. The impact detection device (2) according to any one of the preceding claims, wherein the introduction element (7) is formed to couple the pressure hose (6) to the chamber (4) at a preset inclination angle, wherein the pressure hose (6) is arranged obliquely downwards towards the chamber (4) by the preset inclination angle.

8. The impact detection device (2) according to any one of the preceding claims, wherein the introduction element (7) comprises a fixing device (9), which is formed to fix the pressure hose (6).

9. The impact detection device (2) according to any one of the preceding claims, wherein the introduction element (7) is attached to the underbody element (3) by means of a plug connection (11) and/or adhesive connection.

10. A motor vehicle (1) with an impact detection device (2) according to any one of the preceding claims.

## Revendications

1. Dispositif de détection d'impact (2) pour une batterie de traction (12) d'un véhicule automobile (1) comportant un élément sous-sol (3) pour la batterie de traction (12) et au moins une chambre remplie d'air (4) qui est formée sur l'élément sous-sol (3), dans lequel la chambre (4), au moins latéralement, est rendre étanche et définie à l'extérieur par un matériau d'étanchéité (5), et dans lequel le dispositif de détection d'impact (2) comporte en outre un tuyau de pression (6) et un élément d'introduction (7) pour le tuyau de pression (6), dans lequel, par le tuyau de pression (6), la chambre (4) est couplée à un capteur de pression, et dans lequel l'élément d'introduction (7) est fixé à l'élément sous-sol (3) et est formé pour coupler le tuyau de pression (6) à une position prédéfinie à la chambre (4) à travers le matériau d'étanchéité (5), dans lequel l'élément d'introduction (7) est incorporé par le matériau d'étanchéité (5) pour rendre étanche la chambre (4).

2. Dispositif de détection d'impact (2) selon la revendication 1, dans lequel l'élément d'introduction (7) comporte un corps de base à travers lequel est formé un canal de passage cylindrique pour introduire le tuyau de pression (6).

3. Dispositif de détection d'impact (2) selon la revendication 2, dans lequel une butée (8) pour le tuyau de pression (6) est agencée dans le canal de passage.

4. Dispositif de détection d'impact (2) selon l'une quelconque des revendications précédentes, dans lequel un élément de filtre perméable à l'air (10) est agencé dans l'élément d'introduction (7), dans lequel l'élément de filtre (10) est approprié comme filtre d'impuretés.

5. Dispositif de détection d'impact (2) selon la revendication 4, dans lequel l'élément de filtre (10) est formé en tant que structure réticulaire.

6. Dispositif de détection d'impact (2) selon la revendication 1, dans lequel élément d'introduction (7) comporte un corps de base, dans lequel le corps de base comporte un évidement semi-cylindrique sur une face supérieure qui est formée en tant que liaison d'enfichage pour le tuyau de pression (6).

7. Dispositif de détection d'impact (2) selon l'une quelconque des revendications précédentes, dans lequel élément d'introduction (7) est formé pour coupler le tuyau de pression (6) à la chambre (4) avec un angle d'inclinaison prédéfini, dans lequel, par l'angle d'inclinaison prédéfini, le tuyau de pression (6) est agencé incliné vers le bas dans la direction de la chambre (4).

8. Dispositif de détection d'impact (2) selon l'une quelconque des revendications précédentes, dans lequel l'élément d'introduction (7) comporte un moyen de fixation (9) qui est formé pour fixer le tuyau de pression (6).

9. Dispositif de détection d'impact (2) selon l'une quelconque des revendications précédentes, dans lequel l'élément d'introduction (7) est fixé à l'élément sous-sol (3) par l'intermédiaire d'un raccord enfichable (11) et/ou une liaison par collage.

10. Véhicule automobile (1) comportant un dispositif de détection d'impact (2) selon l'une quelconque des revendications précédentes.
